# EUROPÄISCHE PATENTSCHRIFT

(11) **EP 3 938 322 B1**
(45) Veröffentlichungstag und Bekanntmachung des Hinweises auf die Patenterteilung: **26.04.2023**
(21) Anmeldenummer: 20712891.9
(22) Anmeldetag: 16.03.2020
(51) Int. Cl.: B01F 23/231, B01F 23/233, B01F 27/117, B01F 27/85, C02F 3/12, C02F 3/20

(54) **ABWASSERREINIGUNGSVORRICHTUNG UND VERFAHREN ZUM REINIGEN VON ABWASSER**
WASTE WATER CLEANING DEVICE AND METHOD FOR CLEANING WASTE WATER
DISPOSITIF D'ÉPURATION DES EAUX USÉES ET PROCÉDÉ D'ÉPURATION DES EAUX USÉES

(30) Priorität: 03.05.2019 DE 102019111489
(43) Veröffentlichungstag der Anmeldung: 19.01.2022
(73) Patentinhaber: INVENT Umwelt- und Verfahrenstechnik AG, 91058 Erlangen (DE)
(72) Erfinder: HÖFKEN, Marcus, 91054 Erlangen (DE); HUBER, Peter, 92289 Ursensollen (DE); HUIJBOOM, Marcel, 2596 TC Den Haag (NL)
(74) Vertreter: Dr. Gassner & Partner mbB
(86) Internationale Anmeldenummer: PCT/EP2020/057110
(87) Internationale Veröffentlichungsnummer: WO 2020/224838

(56) Entgegenhaltungen:
- WO-A1-2012/098466
- CN-A- 105 344 283
- JP-A- 2006 255 514

## Beschreibung

Die Erfindung betrifft eine Abwasserreinigungsvorrichtung sowie ein Verfahren zum Reinigen von Abwasser, insbesondere ein sogenanntes SBR-Verfahren.

Die EP 1 132 348 B1 offenbart eine Abwasserreinigungsvorrichtung sowie ein Abwasserreinigungsverfahren zur biologischen Abwasserklärung. Die Abwasserreinigungsvorrichtung weist ein langgestrecktes Becken auf, welches mittels Trennwänden in mehrere Behandlungsabschnitte gegliedert ist. In den Behandlungsabschnitten findet nach dem sogenannten "Sequencing Batch Reactor"-Verfahren (= SBR-Verfahren) eine Reinigung des Abwassers statt. Dazu wird das Abwasser in einem ersten Behandlungsabschnitt mit einem Belebtschlamm in Kontakt gebracht. Anschließend wird die aus dem Abwasser und dem Belebtschlamm gebildete Suspension, insbesondere in einem zweiten Behandlungsabschnitt, belüftet. Schließlich wird die Suspension in einem dritten Behandlungsabschnitt weder belüftet noch bewegt. Das geklärte Wasser wird als Überstand mittels eines Dekanters abgezogen. Das SBR-Verfahren wird üblicherweise chargenweise durchgeführt.

Bei der aus der EP 1 132 348 B1 bekannten Abwasserreinigungsvorrichtung sind die beweglichen Trennwände aus einer wasserdichten, flexiblen Folie hergestellt. Eine solche Folie ist nicht besonders haltbar. Zur Überleitung des Abwassers von einem Behandlungsabschnitt in den nächsten sind Pumpen und Leitungen erforderlich. Die Klärungseffizienz der bekannten Abwasserreinigungsvorrichtung ist nicht allzu hoch.

JP2006255514 A offenbart eine weitere Wasseraufbereitungsanlage aus dem Stand der Technik.

Aufgabe der Erfindung ist es, die Nachteile nach dem Stand der Technik zu beseitigen. Es sollen insbesondere eine Abwasserreinigungsvorrichtung und ein Verfahren angegeben werden, welche ein Reinigen von Abwasser mit einer verbesserten Effizienz ermöglichen. Die Abwasserreinigungsvorrichtung und das Verfahren sollen insbesondere auch eine kontinuierliche Reinigung von Abwasser ermöglichen.

Diese Aufgabe wird durch die Merkmale der Patentansprüche 1 und 8 gelöst. Zweckmäßige Ausgestaltungen der Erfindung ergeben sich aus den Merkmalen der abhängigen Patentansprüche.

Nach Maßgabe der Erfindung wird eine Abwasserreinigungsvorrichtung zum Reinigen von Abwasser vorgeschlagen, umfassend:
ein langgestrecktes Becken, welches an seiner ersten Schmalseite einen Zulauf zum Zuführen von Abwasser aufweist,
ein erstes Vertikalrührwerk mit einem an einer vertikalen ersten Rührwelle angebrachten ersten Hyperboloid-Rührkörper, wobei das erste Vertikalrührwerk in einem ersten Behandlungsabschnitt an der ersten Schmalseite stromabwärts des Zulaufs vorgesehen ist,
ein zweites Vertikalrührwerk mit einem an einer vertikalen zweiten Rührwelle angebrachten zweiten Hyperboloid-Rührkörper, wobei das zweite Vertikalrührwerk in einem zweiten Behandlungsabschnitt stromabwärts des ersten Vertikalrührwerks vorgesehen ist,
eine Belüftungseinrichtung mit einem Gebläse zum Belüften von im Becken aufgenommenem Abwasser,
eine erste Antriebseinrichtung zum Rotieren des ersten Hyperboloid-Rührkörpers in eine erste Drehrichtung,
eine zweite Antriebseinrichtung zum Rotieren des zweiten Hyperboloid-Rührkörpers in einer der ersten Drehrichtung entgegengesetzte zweite Drehrichtung, und
einen Dekanter, welcher zum Abführen von gereinigtem Abwasser in einem dritten Behandlungsabschnitt an einer der ersten Schmalseite gegenüberliegenden zweiten Schmalseite vorgesehen ist.

Im Sinne der vorliegenden Erfindung strömt das Abwasser vom Zulauf an der ersten Schmalseite zum Dekanter an der zweiten Schmalseite. Entsprechend dieser Stromrichtung ist das erste Vertikalrührwerk stromabwärts des Zulaufs und das zweite Vertikalrührwerk stromabwärts des ersten Vertikalrührwerks angeordnet. Jedes der Vertikalrührwerke weist als Rührkörper einen Hyperboloid-Rührkörper auf. Bei der Rotation eines Hyperboloid-Rührkörpers bildet sich eine Strömung aus, welche entlang der Rührwelle in Richtung des Hyperboloid-Rührkörpers gerichtet ist. Die Strömung biegt auf der Oberfläche des Hyperboloid-Rührkörpers in eine im Wesentlichen horizontale Richtung um. In einiger Entfernung vom Umfangsrand des Hyperboloid-Rührkörpers biegt die Strömung sodann wieder in eine vertikale, zur Oberfläche des Abwassers hin gerichtete Richtung um. Die Strömung verläuft dann etwa parallel zur Oberfläche und biegt anschließend wieder in Richtung der Rührwelle um. Es bildet sich also durch die Wirkung des Vertikalrührwerks eine zirkulierende Strömung aus. Die Strömung rotiert außerdem axial um die Rührwelle entsprechend deren Drehrichtung. Indem das erste Vertikalrührwerk und das zweite Vertikalrührwerk mit einer unterschiedlichen Drehrichtung betrieben werden, bildet sich zwischen den aufeinanderfolgenden Vertikalrührwerken eine Zone aus, in welcher die Strömung im Wesentlichen vertikal nach oben in Richtung der Oberfläche des Abwassers gerichtet ist. Dort teilt sich die Strömung und gelangt zurück in den jeweiligen Behandlungsabschnitt. Durch den erfindungsgemäß vorgeschlagenen Einsatz zweier entgegengesetzt rotierender Vertikalrührwerke ist es also möglich, ohne das Vorsehen von Trennwänden in einem langgestreckten Becken Behandlungsabschnitte zu schaffen, in denen Abwasser unterschiedlichen Behandlungsschritten unterzogen werden kann. Beispielsweise kann das Abwasser im ersten Behandlungsabschnitt mit einer hohen Konzentration an Belebtschlamm in Kontakt gebracht werden. Im zweiten Behandlungsabschnitt kann das Abwasser mit einer geringeren Konzentration an Belebtschlamm in Kontakt und, vorzugsweise gleichzeitig, belüftet werden. Die Belüftung kann in den Behandlungsabschnitten variiert werden. Die Intensität der Belüftung und die Rotationsgeschwindigkeit der Hyperboloid-Rührkörper können ebenfalls in den Behandlungsabschnitten variiert werden.

Die vorgeschlagene Abwasserreinigungsvorrichtung ermöglicht ein effizientes Reinigen von Abwasser. Sie ermöglicht ferner einen kontinuierlichen oder quasi-kontinuierlichen Verfahrensablauf. Pumpen und Leitungen zum Überführen des behandelten Abwassers von einem Behandlungsabschnitt in den nächsten sind nicht erforderlich. Ein Überführen des behandelten Abwassers von einem Behandlungsabschnitt in den Nächsten kann durch eine geeignete Steuerung der Rotiergeschwindigkeit der Vertikalrührwerke, der Menge an durch den Zulauf zugeführtem Abwasser und/oder der Menge an mittels des Dekanters entnommenem Abwasser gesteuert werden.

Nach einer vorteilhaften Ausgestaltung weisen an einer Oberseite des Hyperboloid-Rührkörpers vorgesehene erste Transportrippen eine erste Krümmung und an einer weiteren Oberseite des zweiten Hyperboloid-Rührkörpers vorgesehene Transportrippen eine zur ersten Krümmung entgegengesetzte zweite Krümmung auf. Durch die vorgeschlagene Ausgestaltung der Transportrippen kann die Rühreffizienz und insbesondere die Ausbildung der zirkulierenden Strömung verbessert werden. - Die Rippen können auch geradlinig ausgebildet sein. In diesem Fall weisen die ersten Transportrippen bezüglich der Radialrichtung einen ersten Winkel und die zweiten Transportrippen gegenüber der Radialrichtung einen entgegengesetzten zweiten Winkel auf.

Nach einer besonders vorteilhaften Ausgestaltung ist zumindest einer der Hyperboloid-Rührkörper als Hohlkörper ausgebildet und weist einen zentralen Durchbruch zum Durchführen von Luft sowie Belüftungsdurchbrüche auf. Die Rührwelle kann als Hohlwelle zum Zuführen von Luft zum zentralen Durchbruch ausgebildet sein. Ferner kann die Antriebseinrichtung ein Getriebe mit einer Getriebehohlwelle aufweisen, deren eines Ende mit dem Gebläse und deren anderes Ende mit der Hohlwelle verbunden ist. Nach der vorgeschlagenen Ausgestaltung dient der Hyperboloid-Rührkörper sowohl zum Rühren als auch zum Belüften des Abwassers. Zweckmäßigerweise sind mehrere oder sämtliche Hyperboloid-Rührkörper als Hohlkörper zur Belüftung des Abwassers ausgebildet.

Selbstverständlich kann es auch sein, dass die Belüftungseinrichtung zumindest eine auf einem Boden des Beckens abgestützte, perforierte Luftzuführleitung aufweist, welche mit dem Gebläse verbunden ist. - Es können auch Vorrichtungen vorgesehen sein, welche eine Vielzahl perforierter Luftzuführleitungen aufweisen. Derartige Vorrichtungen sind nach dem Stand der Technik allgemein bekannt.

Nach einer weiteren Ausgestaltung sind im ersten Behandlungsabschnitt in Stromrichtung aufeinanderfolgende mehrere erste Vertikalrührwerke und/oder im zweiten Behandlungsabschnitt in Stromrichtung aufeinanderfolgend mehrere zweite Vertikalrührwerke vorgesehen, wobei die Hyperboloid-Rührkörper unmittelbar aufeinanderfolgender Vertikalrührwerke jeweils mit einer entgegengesetzten Drehrichtung rotiert werden. Die vorgeschlagene Ausgestaltung eignet sich insbesondere für lange Behandlungsbecken und für die Behandlung großer Mengen an Abwasser.

Das Behandlungsbecken kann auch so ausgestaltet sein, dass in einer Richtung senkrecht zur Stromrichtung mehrere Vertikalrührwerke angeordnet sind. Sofern Vertikalrührwerke in einer Richtung senkrecht zur Stromrichtung nebeneinander angeordnet sind, werden diese vorzugsweise jeweils mit derselben Drehrichtung betrieben.

Nach einer vorteilhaften Ausgestaltung ist der Hyperboloid-Rührkörper als Hohlkörper ausgebildet. Er weist zweckmäßigerweise einen zentralen Durchbruch zum Zuführen von Luft sowie Luftaustrittsöffnungen auf. Die Rührwelle kann als Hohlwelle zum Zuführen von Luft zum zentralen Durchbruch ausgebildet sein. Eine Antriebseinrichtung kann ein Getriebe mit einer Getriebehohlwelle aufweisen, deren eines Ende mit dem Gebläse und deren anderes Ende mit der Hohlwelle verbunden ist. - Mit dem vorgeschlagenen Hyperboloid-Rührkörper kann das Abwasser effizient belüftet werden. Es ist insbesondere nicht erforderlich, Belüftungsleitungen am Boden des Beckens zu verlegen.

Nach weiterer Maßgabe der Erfindung wird ein Verfahren zum Reinigen von Abwasser, insbesondere ein SBR-Verfahren, vorgeschlagen, umfassend die folgenden Schritte:
Bereitstellen einer erfindungsgemäßen Abwasserreinigungsvorrichtung, wobei im ersten und im zweiten Behandlungsabschnitt ein Belebtschlamm vorgesehen ist,
Zuführen von Abwasser durch den Zulauf,
Rühren einer aus dem Abwasser und dem Belebtschlamm gebildeten Suspension mittels eines ersten Vertikalrührwerks im ersten Behandlungsabschnitt, wobei der erste Rührkörper mit einer vorgegebenen ersten Rotationsgeschwindigkeit in der ersten Drehrichtung rotiert und die Suspension mittels der Belüftungseinrichtung belüftet wird,
Rühren der Suspension mittels des zweiten Vertikalrührwerks, wobei der zweite Rührkörper mit einer vorgegebenen zweiten Rotationsgeschwindigkeit in der zweiten Drehrichtung rotiert und die Suspension mittels der Belüftungseinrichtung belüftet wird,
Ruhenlassen der Suspension im dritten Behandlungsabschnitt, wobei weder gerührt noch mittels der Belüftungseinrichtung belüftet wird, und
Dekantieren des Überstands mittels des Dekanters.

Das vorgeschlagene Verfahren ermöglicht ein besonders effizientes Reinigen von Abwasser. Wegen der vorgeschlagenen entgegengesetzten Drehrichtungen der aufeinanderfolgenden Rührwerke gelingt es, das Abwasser in den dadurch gebildeten Behandlungsabschnitten unterschiedlichen Bedingungen auszusetzen.

Beispielsweise kann im ersten Behandlungsabschnitt das Abwasser mit einer hohen Konzentration an Belebtschlamm in Kontakt gebracht werden, wohingegen im zweiten Behandlungsabschnitt das Abwasser mit einer erhöhten Konzentration an Luft in Kontakt gebracht werden kann. Es kann das Verfahren sowohl als Batch-Verfahren als auch als kontinuierliches oder quasi-kontinuierliches Verfahren durchgeführt werden.

Vorteilhafterweise ist die erste Rotationsgeschwindigkeit kleiner gewählt als die zweite Rotationsgeschwindigkeit. Damit gelingt es, das Abwasser im ersten Behandlungsabschnitt mit einer hohen Konzentration an Belebtschlamm zu kontaktieren. Es kann insbesondere ein unerwünschter Transport von Belebtschlamm vom ersten Behandlungsabschnitt in den zweiten Behandlungsabschnitt vermindert oder unterbunden werden.

Sofern im ersten Behandlungsabschnitt mehrere erste Vertikalrührwerke vorgesehen sind, können deren erste Rotationsgeschwindigkeiten auch unterschiedlich gewählt sein. Beispielsweise kann die erste Rotationsgeschwindigkeit in stromabwärtiger Richtung hin größer werden. In ähnlicher Weise ist es auch möglich, beim Vorsehen mehrerer zweiter Vertikalrührwerke im zweiten Behandlungsabschnitt die zweiten Rotationsgeschwindigkeiten unterschiedlich zu wählen. Die zweiten Rotationsgeschwindigkeiten können in Richtung zum dritten Behandlungsabschnitt hin abnehmen. Das unterstützt die im dritten Behandlungsabschnitt erwünschte Trennung der Suspension in Belebtschlamm und in geklärtes Abwasser.

Vorteilhafterweise ist die erste Rotationsgeschwindigkeit so gewählt, dass eine Konzentration an Belebtschlamm in einer bodenseitigen unteren Hälfte der Suspension größer ist als in einer oberflächenseitigen oberen Hälfte. Damit kann das Abwasser insbesondere in der bodenseitigen unteren Hälfte mit einer besonders hohen Konzentration an Belebtschlamm in Kontakt gebracht werden.

Im ersten Behandlungsabschnitt können in Stromrichtung aufeinanderfolgend mehrere erste Vertikalrührwerke und/oder im zweiten Behandlungsabschnitt in Stromrichtung aufeinanderfolgend mehrere zweite Vertikalrührwerke vorgesehen sein, wobei die Hyperboloid-Rührkörper unmittelbar aufeinanderfolgender Vertikalrührwerke jeweils in einer entgegengesetzten Richtung rotiert werden. Damit kann eine vorgegebene Standzeit des Abwassers in den jeweiligen Behandlungsabschnitten sichergestellt werden.

Nach einer besonders vorteilhaften Ausgestaltung wird das Abwasser kontinuierlich zugeführt. Es ist allerdings auch möglich, das Abwasser sequentiell zuzuführen. In diesem Fall kann das Verfahren entsprechend dem SBR-Verfahren durchgeführt werden.

Beim SBR-Verfahren wird das Abwasser im mehreren aufeinander folgenden Schritten gerührt. Es kann bei einem oder mehreren Schritten gleichzeitig belüftet werden. Es ist allerdings auch möglich, das Abwasser zu belüften, ohne dass gleichzeitig gerührt wird.

In einem weiteren Schritt wird das Abwasser lediglich mit geringer Intensität gerührt. Bei diesem Schritt wird nicht belüftet. Der Schritt dient der Sedimentation.

In einem weiteren Schritt wird das Abwasser allenfalls im ersten Behandlungsabschnitt mit geringer Intensität gerührt. Bei diesem Schritt wird im dritten Behandlungsabschnitt dekantiert.

Bei sämtlichen vorgenannten Schritten kann dem Behandlungsbecken durch den Zulauf kontinuierlich Abwasser zugeführt werden. Das Dekantieren kann auch kontinuierlich erfolgen.

Zur Durchführung des SBR-Verfahrens können dem erfindungsgemäßen Verfahren weitere Schritte hinzugefügt werden, bei denen insbesondere lediglich gerührt, nicht jedoch belüftet wird.

Vorteilhafterweise wird die Suspension beim Schritt des Ruhenlassens im zweiten Behandlungsabschnitt und/oder dritten Behandlungsabschnitt weder gerührt noch mittels der Belüftungseinrichtung belüftet. Ferner kann die Suspension beim Schritt des Ruhenlassens auch im ersten Behandlungsabschnitt weder gerührt noch mittels der Belüftungseinrichtung belüftet werden. Damit wird der Schritt des Ruhenlassens beschleunigt. Die Effizienz des Verfahrens kann damit weiter erhöht werden.

Nachfolgend werden Ausführungsbeispiele der Erfindung anhand der Zeichnungen näher erläutert. Es zeigen:
- Fig. 1: eine schematische Draufsicht auf eine erste Abwasserreinigungsvorrichtung,
- Fig. 2: eine schematische Schnittansicht gemäß Fig. 1,
- Fig. 3: eine schematische Draufsicht auf eine zweite Abwasserreinigungsvorrichtung,
- Fig. 4: eine Schnittansicht gemäß Fig. 3,
- Fig. 5: eine schematische Draufsicht auf einen ersten Hyperboloid-Rührkörper,
- Fig. 6: eine schematische Draufsicht auf einen zweiten Hyperboloid-Rührkörper,
- Fig. 7: eine teilweise aufgebrochene perspektivische Ansicht eines dritten Hyperboloid-Rührkörpers,
- Fig. 8: eine Draufsicht auf eine Oberschale,
- Fig. 9: eine Unteransicht gemäß Fig. 8,
- Fig. 10: eine Draufsicht auf eine Unterschale,
- Fig. 11: eine Unteransicht gemäß Fig. 10 und
- Fig. 12: eine schematische Schnittansicht durch einen Motor und ein Getriebe.

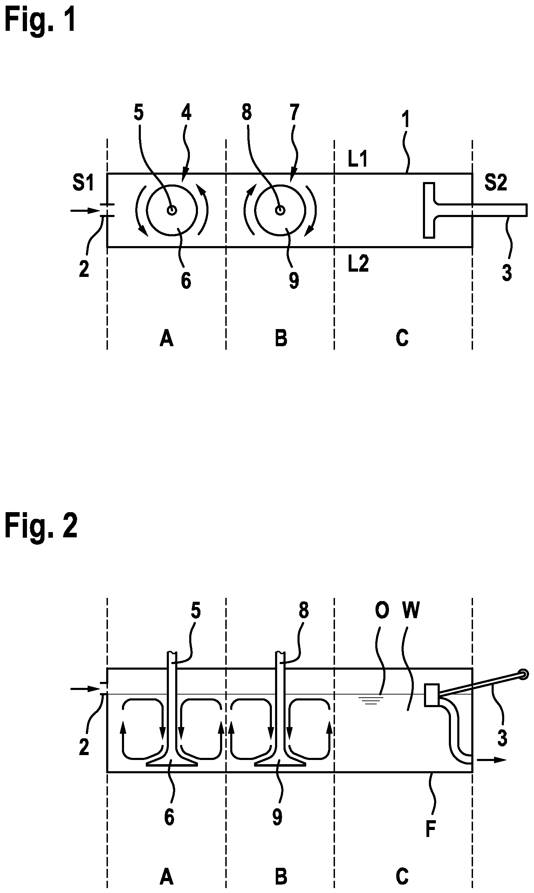

Die Fig. 1 und 2 zeigen Absichten einer ersten Abwasserreinigungsvorrichtung. Die erste Abwasserreinigungsvorrichtung umfasst ein langgestrecktes Becken 1, welches an seiner ersten Schmalseite S1 einen Zulauf 2 zum Zuführen von Abwasser aufweist. An einer der ersten Schmalseite S1 gegenüberliegenden zweiten Schmalseite S2 ist ein Dekanter 3 zum Abführen von gereinigtem Abwasser vorgesehen. Eine erste lange Seite des Beckens 1 ist mit L1, eine gegenüberliegende zweite lange Seite mit L2 bezeichnet. Stromabwärts des Zulaufs ist ein erstes Vertikalrührwerk 4 vorgesehen, welches an einer ersten Rührwelle 5 einen ersten Hyperboloid-Rührkörper 6 aufweist. Mit dem Bezugszeichen 7 ist ein zweites Vertikalrührwerk bezeichnet, welches an einer zweiten Rührwelle 8 einen zweiten Hyperboloid-Rührkörper 9 aufweist.

Das erste Vertikalrührwerk 4 weist eine (hier nicht gezeigte) erste Antriebseinrichtung auf, mit welcher der erste Hyperboloid-Rührkörper 6 in Draufsicht entgegen dem Uhrzeigersinn rotierbar ist. Das zweite Vertikalrührwerk 7 ist mit einer (hier nicht gezeigten) zweiten Antriebseinrichtung versehen, mit welcher der zweite Hyperboloid-Rührkörper 9 im Uhrzeigersinn rotierbar ist.

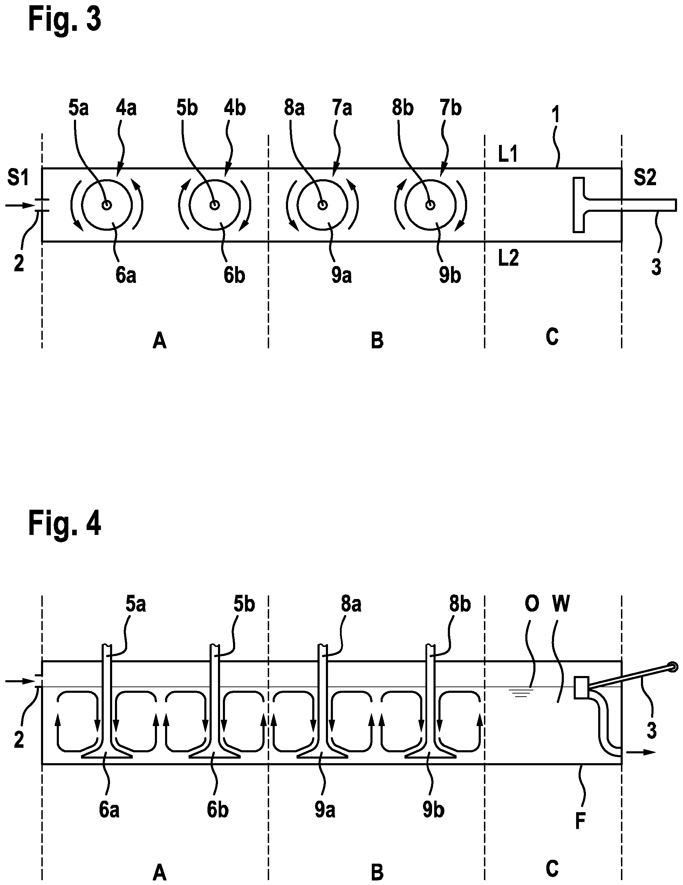

Bei der in den Fig. 3 und 4 schematisch gezeigten zweiten Abwasserreinigungsvorrichtung sind in einer vom Zulauf 2 zum Dekanter 3 gerichteten Stromrichtung aufeinanderfolgend zwei erste Vertikalrührwerke 4a, 4b und darauffolgend zwei zweite Vertikalrührwerke 7a, 7b vorgesehen. Die ersten Antriebseinrichtungen (hier nicht gezeigt) der ersten Vertikalrührwerke 4a, 4b sind so ausgestaltet, dass deren Hyperboloid-Rührkörper 6a, 6b in entgegengesetzter Richtung rotieret werden. In ähnlicher Weise sind die zweiten Antriebseinrichtungen (hier nicht gezeigt) so ausgestaltet, dass auch die zweiten Hyperboloid-Rührkörper 9a, 9b in entgegengesetzter Richtung rotiert werden. Der erste Hyperboloid-Rührkörper 6b des ersten Vertikalrührwerks 5b wird vorteilhafterweise entgegengesetzt rotiert zum zweiten Hyperboloid-Rührkörper 9a des zweiten Vertikalrührwerks 7a. Infolgedessen werden bei dieser vorteilhaften Ausgestaltung jeweils aufeinanderfolgende Hyperboloid-Rührkörper 6a, 6b, 9a, 9b entgegengesetzt rotiert.

In einem stromabwärts des Zulaufs 2 vorgesehenen ersten Behandlungsabschnitt A des Beckens 1 ist zumindest ein erstes Vertikalrührwerk 4, 4a, 4b angeordnet. In einem stromabwärts des ersten Behandlungsabschnitts A vorgesehenen zweiten Behandlungsabschnitt B ist zumindest ein zweites Vertikalrührwerk 7, 7a, 7b angeordnet. In einem stromabwärts des zweiten Behandlungsabschnitts B sich anschließenden dritten Behandlungsabschnitt C ist hier kein Vertikalrührwerk angeordnet. Dort befindet sich der Dekanter 3. - Es kann allerdings auch sein, dass im dritten Behandlungsabschnitt C ebenfalls zumindest ein Vertikalrührwerk vorgesehen ist.

Im ersten A und im zweiten Behandlungsabschnitt B sind hier nicht gezeigte Belüftungseinrichtungen vorgesehen. Es kann sich dabei um auf dem Boden F des Beckens 1 verlegte perforierte Vorleitungen handeln. Nach einer bevorzugten Ausgestaltung wird die Luft durch die vorzugsweise als Hohlkörper ausgebildeten Hyperboloid-Rührkörper 6, 6a, 6b, 9, 9a, 9b zugeführt.

Die Funktion der vorgeschlagenen Abwasserreinigungsvorrichtungen ist Folgende:
Durch die Rotation eines der Hyperboloid-Rührkörper 6, 6a, 6b, 9, 9a, 9b ergibt sich jeweils eine Strömung, welche von einer Oberfläche O eines im Becken 1 aufgenommenen Abwassers W entlang der vertikalen Rührwelle 5, 8 auf eine Oberseite des Hyperboloid-Rührkörpers 6, 6a, 6b, 9, 9a, 9b gerichtet ist. Die Strömung biegt sodann parallel zur Oberseite des Hyperboloid-Rührkörper 6, 6a, 6b, 9, 9a, 9b in eine im Wesentlichen horizontale Richtung um. Sie biegt sodann weiter um und richtet sich wiederum zur Oberseite O. Es ergibt sich insgesamt eine von der Oberseite O zu einem Boden F des Beckens 1 gerichtete zirkulierende Strömung.

Wie insbesondere aus den Fig. 2 und 4 ersichtlich ist, werden beim Betrieb benachbarter Vertikalrührwerke 4, 4a, 4b, 7, 7a, 7b Strömungsabteile gebildet, welche durch die sich zwischen zwei aufeinanderfolgenden Vertikalrührwerken 4, 4a, 4b, 7, 7a, 7b ergebenden Aufwärtsströmungen vom Boden F in Richtung zur Oberfläche O sowie die beiden Längsseiten L1 und L2 des Beckens 1 begrenzt werden. Zwischen aufeinanderfolgenden Strömungsabteilen findet ein nur geringer Austausch einer aus dem Abwasser W und einem Belebtschlamm gebildeten Suspension statt. Der Austausch bzw. Transport der Suspension vom Zulauf 2 zum Dekanter 3 kann durch einen oder mehrere der folgenden Parameter gesteuert werden:
- Menge an durch den Zulauf 2 pro Zeiteinheit zugeführtem Abwasser W,
- Rotationsgeschwindigkeit der ersten und/oder zweiten Vertikalrührwerke 4, 4a, 4b, 7, 7a, 7b,
- Menge des pro Zeiteinheit mittels des Dekanters 3 entnommenem gereinigtem Abwassers W.

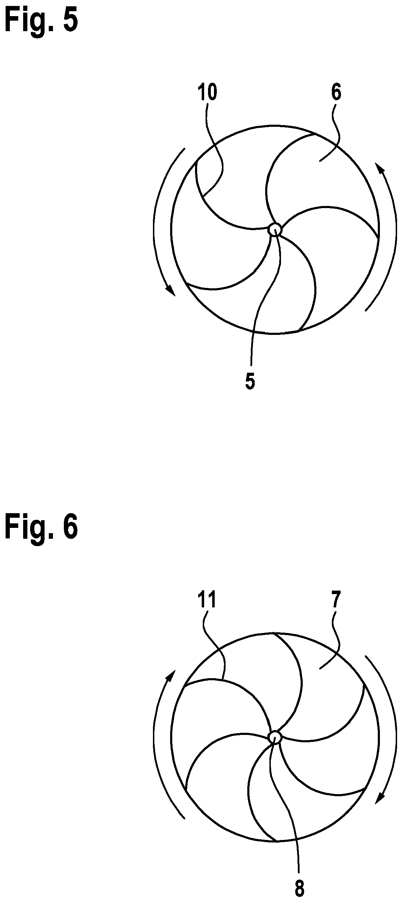

Fig. 5 zeigt beispielhaft eine Draufsicht auf eine Oberseite O1 des ersten Hyperboloid-Rührkörpers. An der ersten Oberseite O1 erstrecken sich erste Transportrippen 10, welche von der ersten Rührwelle 5 zunächst in radialer Richtung zum Umfangsrand U des ersten Hyperboloid-Rührkörpers 6 hin verlaufen. Die ersten Transportrippen 10 biegen sodann folgend einer ersten Krümmung zum Umfangsrand U hin in eine tangentiale Richtung um.

Fig. 6 zeigt eine Draufsicht auf eine weitere Oberseite des zweiten Hyperboloid-Rührkörpers 7. Dort erstrecken sich von der zweiten Rührwelle 8 wiederum in radialer Richtung zweite Transportrippen 11, welche zum Umfangsrand U hin entsprechend einer zweiten Krümmung in eine tangentiale Richtung umbiegen. Die erste Krümmung ist der zweiten Krümmung entgegengesetzt. Wegen der unterschiedlichen Ausgestaltung der ersten 10 und der zweiten Transportrippen 11 eignet sich der erste Hyperboloid-Rührkörper 5 insbesondere für eine entgegengesetzt dem Uhrzeigersinn gerichtete Rotation, wohingegen sich der zweite Hyperboloid-Rührkörper 7 für eine im Uhrzeigersinn gerichtete Rotation eignet. Unter Verwendung von Hyperboloid-Rührkörpern 6, 7 mit Transportrippen 10, 11 kann eine besonders effiziente zirkulierende Strömung vom Boden F hin zur Oberfläche O erzeugt werden.

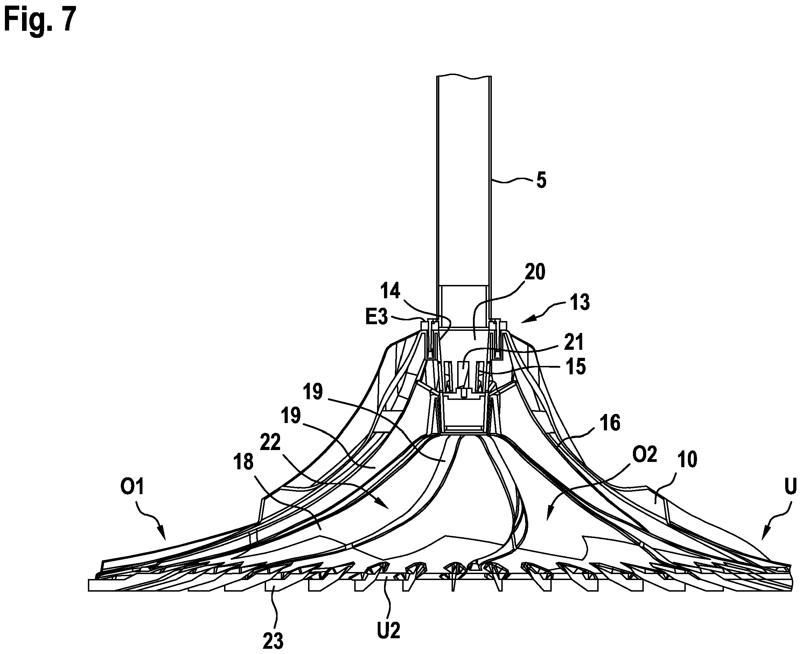

Die Fig. 7 bis 11 zeigen eine vorteilhafte Ausgestaltung der Hyperboloid-Rührkörper.

In Fig. 7 ist an einer hohlen Rührwelle 12 ein Hyperboloid-Rührkörper angebracht. Der Hyperboloid-Rührkörper weist einen mit dem Bezugszeichen 13 bezeichneten zentralen Anschlussabschnitt auf. Der Anschlussabschnitt 13 weist einen zentralen Durchbruch 14 zum Durchführen von Luft auf.

Mit dem Bezugszeichen 16 ist eine Oberschale bezeichnet, von deren erster Oberseite O1 sich Transportrippen 17 erstrecken. Mit dem Bezugszeichen 18 ist eine Unterschale bezeichnet, von deren zweiter Oberseite O2 sich Wände 19 erstrecken. Das Bezugszeichen 20 bezeichnet einen Einsatz, welcher stromabwärts des Durchbruchs 14 vorgesehen ist und einen Luftverteilungsraum 15 bildet. Der Einsatz 20 ist nach Art eines konischen Bechers ausgebildet und weist an seiner Umfangswand mehrere Luftverteilungsdurchbrüche 21 auf. Jeder der Luftverteilungsdurchbrüche 21 mündet in einen durch benachbarte Wände 19 sowie die Oberschale 16 und die Unterschale 18 gebildeten Luftkanal 22. An einer zweiten Unterseite U2 der Unterschale 18 sind an deren Umfangsrand Scherrippen 23 angebracht.

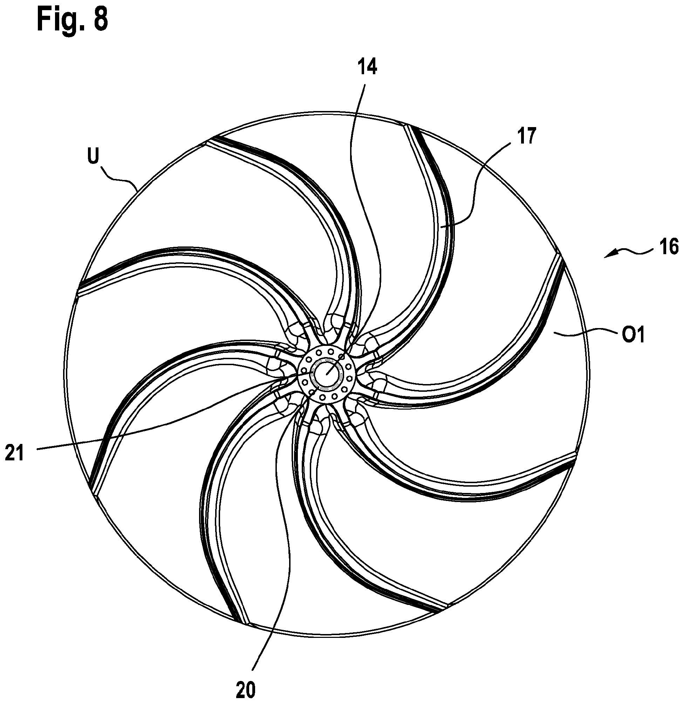

Fig. 8 zeigt eine Draufsicht auf die erste Oberseite O1 der Oberschale. Erkennbar sind die sich von der ersten Oberseite O1 erstreckenden Transportrippen 17, welche vom Durchbruch 14 her zunächst in eine radiale Richtung verlaufen und dann zum Umfangsrand U hin in eine tangentiale Richtung umbiegen. Ferner ist der dem Durchbruch 14 stromabwärts nachgeordnete Einsatz 20 mit den Luftverteilungsdurchbrüchen 21 erkennbar.

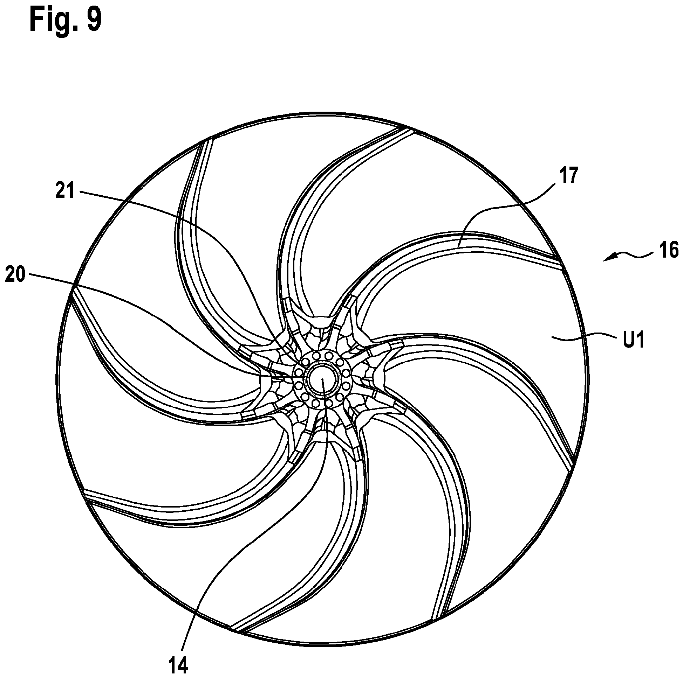

Fig. 9 zeigt eine Unteransicht gemäß Fig. 8. An einer ersten Unterseite U1 der Oberschale 16 sind die Transportrippen 17 in Form von Vertiefungen erkennbar.

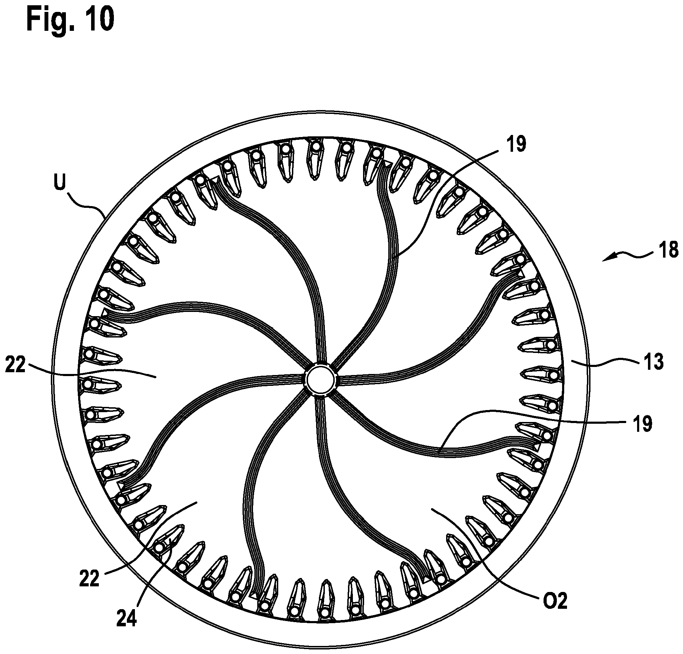

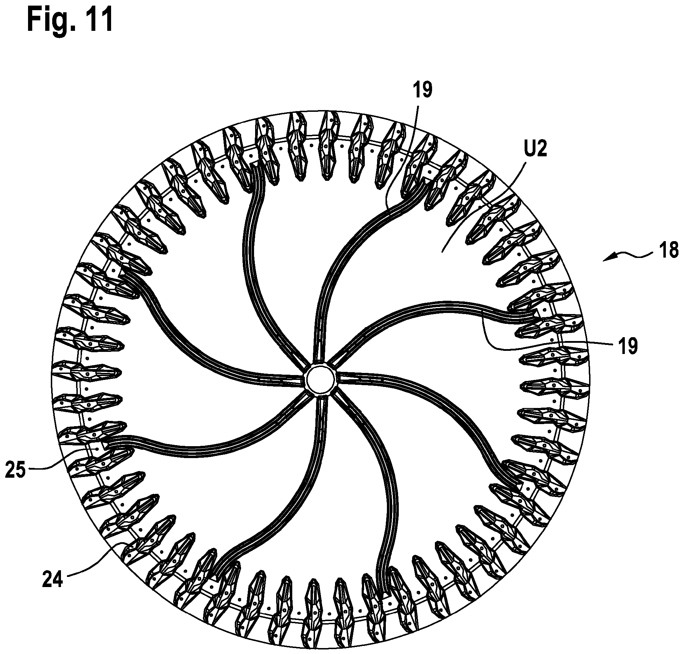

Fig. 10 zeigt eine Draufsicht auf die zweite Oberseite O2 der Unterschale 18. Die Unterschale 18 ist in ihrem Zentrum, d. h. gegenüberliegend dem in der Oberschale 16 vorgesehenen Durchbruch 14, geschlossen ausgebildet. Von der zweiten Oberseite O2 erstrecken sich die Wände 19. Die Wände 19 verlaufen - ähnlich wie die Transportrippen 17 - vom Zentrum her zunächst in einer radialen Richtung und biegen dann in eine im Wesentlichen tangentiale Richtung zum Umfangsrand U hin um. Am Umfangsrand U befinden sich eine Vielzahl von Halteeinrichtungen 24, welche Vertiefungen in der zweiten Oberseite O2 bilden. Die Halteeinrichtungen 24 dienen - wie insbesondere in Zusammensicht mit der nachfolgend erläuterten Fig. 11 ersichtlich ist - der Aufnahme und Befestigung der Scherrippen 23.

Fig. 11 zeigt eine Unteransicht gemäß Fig. 10. An einer zweiten Unterseite U2 der Unterschale sind die Wände 19 in Form von Vertiefungen erkennbar. Die Halteeinrichtungen 24 erstrecken sich dagegen von der zweiten Unterseite U2. Es wird insoweit auch auf die Fig. 7 verwiesen. Zwischen jeweils zwei benachbarten Halteeinrichtungen 24 bzw. zwei benachbarten Scherrippen 23 ist jeweils eine Luftaustrittsöffnung 25 vorgesehen.

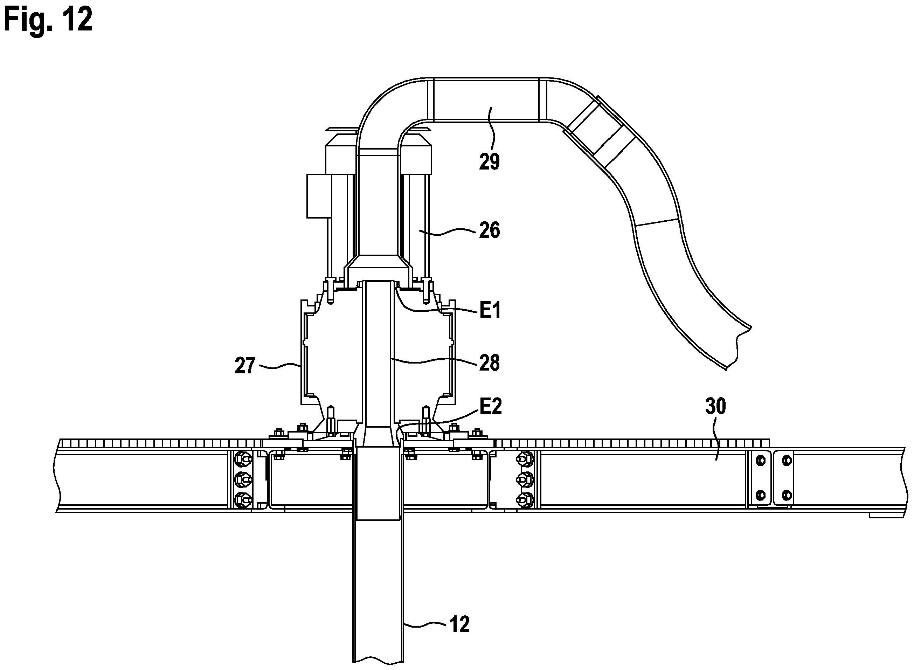

Fig. 12 zeigt eine schematische Schnittansicht durch ein Getriebe 27, welches antriebsmäßig mit einem Motor 26 verbunden ist. Das Getriebe 27 weist eine Getriebehohlwelle 28 auf, deren erstes Ende mit einer Luftzuführleitung 29 verbunden ist. Ein mit der Luftzuführleitung 29 verbundenes Gebläse ist hier nicht dargestellt. Ein zweites Ende E2 der Getriebehohlwelle 28 ist mit der hohlen Rührwelle 12 verbunden. Wie aus Fig. 7 ersichtlich ist, ist ein drittes Ende E3 der hohlen Rührwelle 12 mit dem in den Fig. 7 bis 11 gezeigten Hyperboloid-Rührkörper verbunden.

Die sich insbesondere aus den Fig. 7 bis 12 ergebende Rühr- und Begasungseinrichtung kann beispielsweise an einer Traverse bzw. Brücke 30 (siehe Fig. 12) angebracht sein, welche das Becken 1 zwischen den beiden langen Seiten L1 und L2 überspannt.

Mit der vorgeschlagenen Abwasserreinigungsvorrichtung lässt sich besonders effizient ein Verfahren zum Reinigen von Abwasser, insbesondere ein SBR-Verfahren, durchführen.

Zur Durchführung des Verfahrens werden einem im Becken 1 vorgelegten Abwasser W im ersten Behandlungsabschnitt A eine vorgegebene Menge an Belebtschlamm zugesetzt. Das zumindest eine erste Vertikalrührwerk 4, 4a, 4b wird mit einer vorgegebenen ersten Rotationsgeschwindigkeit rotiert, so dass sich aus dem Abwasser W und dem Belebtschlamm eine Suspension bildet. Gleichzeitig wird das zumindest eine zweite Vertikalrührwerk 7, 7a, 7b mit einer zweiten Rotationsgeschwindigkeit rotiert. Die zweite Rotationsgeschwindigkeit ist vorteilhafterweise größer als die erste Rotationsgeschwindigkeit. Infolgedessen und insbesondere wegen der entgegengesetzten Drehrichtung der aufeinanderfolgenden Vertikalrührwerke bildet sich im ersten Behandlungsabschnitt A eine Suspension mit einer hohen Konzentration an Belebtschlamm und im zweiten Behandlungsabschnitt B eine Suspension mit einer geringeren Konzentration an Belebtschlamm aus.

Beim Betrieb der Vertikalrührwerke wird die Suspension entsprechend der in den Fig. 2 und 4 gezeigten Strömungsrichtung umgewälzt. Dabei wird die Suspension, vorteilhafterweise gleichzeitig, mit Luft belüftet. Infolgedessen werden im Belebtschlamm enthaltene Mikroorganismen ernährt Die Mikroorganismen bauen organische Verunreinigungen im Abwasser ab.

Im dritten Behandlungsabschnitt C ruht die Suspension. Die Suspension kann allerdings auch mittels zumindest eines (hier nicht gezeigten) dritten Vertikalrührwerks im dritten Behandlungsabschnitt C langsam gerührt werden. Sie weist dort üblicherweise eine noch geringere Konzentration an Belebtschlamm auf als im zweiten Behandlungsabschnitt B. Im dritten Behandlungsabschnitt C bildet sich ein aus geklärtem Abwasser gebildeter Überstand, welcher mittels des Dekanters 3 abgezogen wird. - Beim Dekantieren wird das zumindest eine dritte Vertikalrührwerk zweckmäßigerweise abgeschaltet.

Das vorgeschlagene Verfahren kann vorteilhafterweise kontinuierlich geführt werden indem ständig Abwasser durch den Zulauf 2 zugeführt und eine entsprechende Menge an geklärtem Abwasser durch den Dekanter 3 abgeführt wird.

Das vorgeschlagene Verfahren kann aber auch in herkömmlicher Weise nach Art eines SBR-Verfahrens durchgeführt werden. Dazu werden die ersten 4, 4a, 4b und zweiten Vertikalrührwerke 7, 7a, 7b nur zeitweise betrieben. Während der Stillstandzeit der Vertikalrührwerke 4, 4a, 4b, 7, 7a, 7b bildet sich im Behandlungsabschnitt C ein aus geklärtem Abwasser gebildeter Überstand, welcher sodann mittels des Dekanters 3 abgezogen werden kann.

### Bezugszeichenliste

- 1: Becken
- 2: Zulauf
- 3: Dekanter
- 4, 4a, 4b: erstes Vertikalrührwerk
- 5, 5a, 5b: erste Rührwelle
- 6, 6a, 6b: erster Hyperboloid-Rührkörper
- 7, 7a, 7b: zweites Vertikalrührwerk
- 8, 8a, 8b: zweite Rührwelle
- 9, 9a, 9b: zweiter Hyperboloid-Rührkörper
- 10: erste Transportrippen
- 11: zweite Transportrippen
- 12: Rührwelle
- 13: Anschlussabschnitt
- 14: Durchbruch
- 15: Luftverteilungsraum
- 16: Oberschale
- 17: Transportrippe
- 18: Unterschale
- 19: Wand
- 20: Einsatz
- 21: Luftverteilungsdurchbruch
- 22: Luftkanal
- 23: Scherrippe
- 24: Halteeinrichtung
- 25: Luftaustrittsöffnung
- 26: Motor
- 27: Getriebe
- 28: Getriebehohlwelle
- 29: Luftzuführleitung
- 30: Floß
- A: erster Behandlungsschritt
- B: zweiter Behandlungsschritt
- C: dritter Behandlungsschritt
- E1: erstes Ende
- E2: zweites Ende
- E3: drittes Ende
- F: Boden
- L1: erste lange Seite
- L2: zweite lange Seite
- O: Oberfläche
- O1: erste Oberseite
- O2: zweite Oberseite
- S1: erste Schmalseite
- S2: zweite Schmalseite
- U: Umfangsrand
- U1: erste Unterseite
- U2: zweite Unterseite
- W: Abwasser

## Patentansprüche

1. Abwasserreinigungsvorrichtung zum Reinigen von Abwasser (W), umfassend
ein langgestrecktes Becken (1), welches an seiner ersten Schmalseite (S1) einen Zulauf (2) zum Zuführen von Abwasser (W) aufweist,
ein erstes Vertikalrührwerk (4, 4a, 4b) mit einem an einer vertikalen ersten Rührwelle (5, 5a, 5b) angebrachten ersten Hyperboloid-Rührkörper (6, 6a, 6b), wobei das erste Vertikalrührwerk (4, 4a, 4b) in einem ersten Behandlungsabschnitt (A) an der ersten Schmalseite (S1) stromabwärts des Zulaufs (2) vorgesehen ist,
ein zweites Vertikalrührwerk (7, 7a, 7b) mit einem an einer vertikalen zweiten Rührwelle (8, 8a, 8b) angebrachten zweiten Hyperboloid-Rührkörper (9, 9a, 9b), wobei das zweite Vertikalrührwerk (7, 7a, 7b) in einem zweiten Behandlungsabschnitt (B) stromabwärts des ersten Vertikalrührwerks (4, 4a, 4b) vorgesehen ist,
eine Belüftungseinrichtung mit einem Gebläse zum Belüften von im Becken (1) aufgenommenem Abwasser (W),
eine erste Antriebseinrichtung zum Rotieren des ersten Hyperboloid-Rührkörpers (6, 6a, 6b) in eine erste Drehrichtung,
eine zweite Antriebseinrichtung zum Rotieren des zweiten Hyperboloid-Rührkörpers (9, 9a, 9b) in eine der ersten Drehrichtung entgegengesetzte zweite Drehrichtung, und
einen Dekanter (3), welcher zum Abführen von gereinigtem Abwasser (W) in einem dritten Behandlungsabschnitt (C) an einer der ersten Schmalseite (S1) gegenüberliegenden zweiten Schmalseite (S2) vorgesehen ist.

2. Abwasserreinigungsvorrichtung nach Anspruch 1, wobei an einer Oberseite des ersten Hyperboloid-Rührkörpers (6, 6a, 6b) vorgesehene erste Transportrippen (10) eine erste Krümmung, und an einer weiteren Oberseite des zweiten Hyperboloid-Rührkörpers (9, 9a, 9b) vorgesehene zweite Transportrippen (11) eine zur ersten Krümmung entgegengesetzte zweite Krümmung aufweisen.

3. Abwasserreinigungsvorrichtung nach einem der vorhergehenden Ansprüche, wobei zumindest einer der Hyperboloid-Rührkörper (6, 6a, 6b, 9, 9a, 9b) als Hohlkörper ausgebildet ist, einen zentralen Durchbruch (14) zum Zuführen von Luft sowie Luftaustrittsöffnungen (25) aufweist.

4. Abwasserreinigungsvorrichtung nach Anspruch 3, wobei die Rührwelle (5, 5a, 5b, 8, 8a, 8b) als Hohlwelle zum Zuführen von Luft zum zentralen Durchbruch (14) ausgebildet ist.

5. Abwasserreinigungsvorrichtung nach Anspruch 4, wobei die Antriebseinrichtung ein Getriebe (27) mit einer Getriebehohlwelle (28) aufweist, deren eines Ende mit dem Gebläse und deren anderes Ende mit der Hohlwelle verbunden ist.

6. Abwasserreinigungsvorrichtung nach einem der vorhergehenden Ansprüche, wobei die Belüftungseinrichtung zumindest eine auf einem Boden (F) des Beckens (1) abgestützte perforierte Luftzufuhrleitung aufweist, welche mit dem Gebläse verbunden ist.

7. Abwasserreinigungsvorrichtung nach einem der vorhergehenden Ansprüche, wobei im ersten Behandlungsabschnitt (A) in Stromrichtung aufeinanderfolgend mehrere erste Vertikalrührwerke (4, 4a, 4b) und/oder im zweiten Behandlungsabschnitt (B) in Stromrichtung aufeinanderfolgend mehrere zweite Vertikalrührwerke (7, 7a, 7b) vorgesehen sind, wobei die Hyperboloid-Rührkörper (6, 6a, 6b, 9, 9a, 9b) unmittelbar aufeinanderfolgender Vertikalrührwerke (4, 4a, 4b, 7, 7a, 7b) jeweils mit einer entgegengesetzten Drehrichtung rotiert werden.

8. Verfahren zum Reinigen von Abwasser, insbesondere SBR-Verfahren, umfassend die folgenden Schritte:
Bereitstellen einer Abwasserreinigungsvorrichtung nach einem der vorhergehenden Ansprüche, wobei im ersten (A) und im zweiten Behandlungsabschnitt (B) ein Belebtschlamm vorgesehen ist,
Zuführen von Abwasser (W) durch den Zulauf (2),
Rühren einer aus dem Abwasser (W) und dem Belebtschlamm gebildeten Suspension mittels des ersten Vertikalrührwerks (4, 4a, 4b) im ersten Behandlungsabschnitt (A), wobei der erste Hyperboloid-Rührkörper (6, 6a, 6b) mit einer vorgegebenen ersten Rotationsgeschwindigkeit in der ersten Drehrichtung rotiert und die Suspension mittels der Belüftungseinrichtung belüftet wird,
Rühren der Suspension mittels des zweiten Vertikalrührwerks (7, 7a, 7b), wobei der zweite Hyperboloid-Rührkörper (9, 9a, 9b) mit einer vorgegebenen zweiten Rotationsgeschwindigkeit in der zweiten Drehrichtung rotiert und die Suspension mittels der Belüftungseinrichtung belüftet wird,
Ruhenlassen der Suspension im dritten Behandlungsabschnitt (C), wobei weder gerührt noch mittels der Belüftungseinrichtung belüftet wird, und
Dekantieren des Überstands mittels des Dekanters (3).

9. Verfahren nach Anspruch 8, wobei die erste Rotationsgeschwindigkeit kleiner gewählt ist als die zweite Rotationsgeschwindigkeit.

10. Verfahren nach Anspruch 8 oder 9, wobei die erste Rotationsgeschwindigkeit so gewählt ist, dass eine Konzentration an Belebtschlamm in einer bodenseitigen unteren Hälfte der Suspension größer ist als in der oberflächenseitigen oberen Hälfte.

11. Verfahren nach einem der Ansprüche 8 bis 10, wobei im ersten Behandlungsabschnitt (A) in Stromrichtung aufeinanderfolgend mehrere erste Vertikalrührwerke (4, 4a, 4b) und/oder im zweiten Behandlungsabschnitt (B) in Stromrichtung aufeinanderfolgend mehrere zweite Vertikalrührwerke (7, 7a, 7b) vorgesehen sind, wobei die Hyperboloid-Rührkörper (6, 6a, 6b, 9, 9a, 9b) unmittelbar aufeinanderfolgender Vertikalrührwerke (4, 4a, 4b, 7, 7a, 7b) jeweils mit einer entgegengesetzten Drehrichtung rotiert werden.

12. Verfahren nach einem der Ansprüche 8 bis 11, wobei das Abwasser kontinuierlich zugeführt wird.

13. Verfahren nach einem der Ansprüche 8 bis 11, wobei das Abwasser sequenziell zugeführt wird.

14. Verfahren nach einem der Ansprüche 8 bis 13, wobei die Suspension beim Schritt des Ruhenlassens im zweiten Behandlungsabschnitt (B) und/oder dritten Behandlungsabschnitt (C) weder gerührt noch mittels der Belüftungseinrichtung belüftet wird.

15. Verfahren nach einem der Ansprüche 8 bis 14, wobei die Suspension beim Schritt des Ruhenlassens im ersten Behandlungsabschnitt (A) weder gerührt noch mittels der Belüftungseinrichtung belüftet wird.

## Claims

1. A wastewater purification apparatus for purifying wastewater (W), comprising
an elongate tank (1), which, on its first narrow side (S1), has an inflow (2) for feeding wastewater (W),
a first vertical agitator (4, 4a, 4b) with a first hyperboloid agitator body (6, 6a, 6b) mounted on a vertical first agitator shaft (5, 5a, 5b), wherein the first vertical agitator (4, 4a, 4b) is provided in a first treatment portion (A) downstream of the inflow (2) on the first narrow side (S1),
a second vertical agitator (7, 7a, 7b) with a second hyperboloid agitator body (9, 9a, 9b) mounted on a vertical second agitator shaft (8, 8a, 8b), wherein the second vertical agitator (7, 7a, 7b) is provided in a second treatment portion (B) downstream of the first vertical agitator (4, 4a, 4b),
an aeration device with a fan for aerating wastewater (W) received in the tank (1),
a first drive device for rotating the first hyperboloid agitator body (6, 6a, 6b) in a first rotation direction,
a second drive device for rotating the second hyperboloid agitator body (9, 9a, 9b) in a second rotation direction, which is opposite the first rotation direction, and
a decanter (3), which is provided for discharging purified wastewater (W) in a third treatment portion (C) on a second narrow side (S2), which is opposite the first narrow side (S1).

2. The wastewater purification apparatus according to claim 1, wherein first transport ribs (10) provided on an upper side of the first hyperboloid agitator body (6, 6a, 6b) have a first curvature, and second transport ribs (11) provided on a further upper side of the second hyperboloid agitator body (9, 9a, 9b) have a second curvature, which is opposite the first curvature.

3. The wastewater purification apparatus according to either one of the preceding claims, wherein at least one of the hyperboloid agitator bodies (6, 6a, 6b, 9, 9a, 9b) is formed as a hollow body and has a central aperture (14) for feeding air and also has air outlet openings (25).

4. The wastewater purification apparatus according to claim 3, wherein the agitator shaft (5, 5a, 5b, 8, 8a, 8b) is formed as a hollow shaft for feeding air to the central aperture (14).

5. The wastewater purification apparatus according to claim 4, wherein the drive device has a transmission (27) with a hollow transmission shaft (28), one end of which is connected to the fan and the other end of which is connected to the hollow shaft.

6. The wastewater purification apparatus according to any one of the preceding claims, wherein the aeration device has at least one perforated air feed line supported on a base (F) of the tank (1), which air feed line is connected to the fan.

7. The wastewater purification apparatus according to any one of the preceding claims, wherein a plurality of first vertical agitators (4, 4a, 4b) are provided successively in the flow direction in the first treatment portion (A) and/or a plurality of second vertical agitators (7, 7a, 7b) are provided successively in the flow direction in the second treatment portion (B), wherein the hyperboloid agitator bodies (6, 6a, 6b, 9, 9a, 9b) of directly successive vertical agitators (4, 4a, 4b, 7, 7a, 7b) are rotated in each case with opposite rotation directions.

8. A process for purifying wastewater, in particular an SBR process, comprising the following steps:
providing a wastewater purification apparatus according to any one of the preceding claims, wherein an activated sludge is provided in the first treatment portion (A) and in the second treatment portion (B),
feeding wastewater (W) through the inflow (2),
stirring a suspension formed from the wastewater (W) and the activated sludge by means of the first vertical agitator (4, 4a, 4b) in the first treatment portion (A), wherein the first hyperboloid agitator body (6, 6a, 6b) rotates at a predefined first rotary speed in the first rotation direction and the suspension is aerated by means of the aeration device,
stirring the suspension by means of the second vertical agitator (7, 7a, 7b), wherein the second hyperboloid agitator body (9, 9a, 9b) is rotated at a predefined second rotary speed in the second rotation direction and the suspension is aerated by means of the aeration device,
leaving the suspension to rest in the third treatment portion (C), wherein the suspension is neither stirred nor aerated by means of the aeration device, and
decanting the supernatant by means of the decanter (3).

9. The process according to claim 8, wherein the first rotary speed is selected to be slower than the second rotary speed.

10. The process according to claim 8 or 9, wherein the first rotary speed is selected such that a concentration of activated sludge in a base-side, lower half of the suspension is greater than in the surface-side, upper half.

11. The process according to any one of claims 8 to 10, wherein a plurality of first vertical agitators (4, 4a, 4b) are provided in succession in the flow direction in the first treatment portion (A) and/or a plurality of second vertical agitators (7, 7a, 7b) are provided in succession in the flow direction in the second treatment portion (B), wherein the hyperboloid agitator bodies (6, 6a, 6b, 9, 9a, 9b) of directly successive vertical agitators (4, 4a, 4b, 7, 7a, 7b) are rotated in each case with opposite rotation directions.

12. The process according to any one of claims 8 to 11, wherein the wastewater is fed continuously.

13. The process according to any one of claims 8 to 11, wherein the wastewater is fed sequentially.

14. The process according to any one of claims 8 to 13, wherein the suspension is neither stirred nor aerated by means of the aeration device during the step in which the suspension is left to rest in the second treatment portion (B) and/or third treatment portion (C).

15. The process according to any one of claims 8 to 14, wherein the suspension is neither stirred nor aerated by means of the aeration device during the step in which the suspension is left to rest in the first treatment portion (A).

## Revendications

1. Dispositif d'épuration d'eaux usées permettant d'épurer des eaux usées (W), comprenant
un bassin (1) allongé, qui comporte une entrée (2) sur son premier petit côté (S1) pour fournir des eaux usées (W),
un premier agitateur vertical (4, 4a, 4b) comportant un premier corps d'agitation hyperboloïde (6, 6a, 6b) monté sur un premier arbre d'agitation vertical (5, 5a, 5b), le premier agitateur vertical (4, 4a, 4b) étant ménagé dans une première section de traitement (A) sur le premier petit côté (S1) en aval de l'entrée (2),
un second agitateur vertical (7, 7a, 7b) comportant un second corps d'agitation hyperboloïde (9, 9a, 9b) monté sur un second arbre d'agitation vertical (8, 8a, 8b), le second agitateur vertical (7, 7a, 7b) étant ménagé dans une deuxième section de traitement (B) en aval du premier agitateur vertical (4, 4a, 4b),
un dispositif d'aération comportant un ventilateur d'aération des eaux usées (W) reçues dans le bassin (1),
un premier dispositif d'entraînement pour faire tourner le premier corps d'agitation hyperboloïde (6, 6a, 6b) dans un premier sens de rotation,
un second dispositif d'entraînement pour faire tourner le second corps d'agitation hyperboloïde (9, 9a, 9b) dans un second sens de rotation opposé au premier sens de rotation, et
un décanteur (3), qui est ménagé pour évacuer les eaux usées (W) épurées dans une troisième section de traitement (C) sur un second petit côté (S2) opposé au premier petit côté (S1).

2. Dispositif d'épuration d'eaux usées selon la revendication 1, en ce que des premières nervures de transport (10) ménagées sur une partie supérieure du premier corps d'agitation hyperboloïde (6, 6a, 6b) comportent une première courbure, et des secondes nervures de transport (11) ménagées sur une autre partie supérieure du second corps d'agitation hyperboloïde (9, 9a, 9b) une seconde courbure opposée à la première courbure.

3. Dispositif d'épuration d'eaux usées selon l'une des revendications précédentes, en ce qu'au moins l'un des corps d'agitation hyperboloïdes (6, 6a, 6b, 9, 9a, 9b) est conçu sous forme de corps creux, en ce qu'il comporte un passage (14) central pour acheminer de l'air ainsi que des ouvertures de sortie d'air (25).

4. Dispositif d'épuration d'eaux usées selon la revendication 3, en ce que l'arbre d'agitation (5, 5a, 5b, 8, 8a, 8b) est conçu sous forme d'arbre creux pour acheminer de l'air vers le passage (14) central.

5. Dispositif d'épuration d'eaux usées selon la revendication 4, en ce que le dispositif d'entraînement comporte une transmission (27) avec un arbre creux de transmission (28), dont une extrémité est reliée avec le ventilateur et l'autre extrémité avec l'arbre creux.

6. Dispositif d'épuration d'eaux usées selon l'une des revendications précédentes, en ce que le dispositif d'aération comporte au moins une conduite d'amenée d'air perforée en appui sur un fond (F) du bassin (1), ladite conduite étant reliée au ventilateur.

7. Dispositif d'épuration d'eaux usées selon l'une des revendications précédentes, en ce que plusieurs premiers agitateurs verticaux (4, 4a, 4b) sont ménagés successivement dans le sens du courant dans la première section de traitement (A) et/ou plusieurs seconds agitateurs verticaux (7, 7a, 7b) successivement dans le sens du courant dans la deuxième section de traitement (B), les corps d'agitation hyperboloïdes (6, 6a, 6b, 9, 9a, 9b) d'agitateurs verticaux (4, 4a, 4b, 7, 7a, 7b) directement successifs tournant respectivement avec un sens de rotation opposé.

8. Procédé d'épuration d'eaux usées, en particulier procédé SBR, comprenant les étapes suivantes consistant à :
fournir un dispositif d'épuration d'eaux usées selon l'une des revendications précédentes, en ce que des boues activées sont prévues dans la première (A) et dans la deuxième section de traitement (B),
acheminer des eaux usées (W) par l'entrée (2),
agiter une suspension formée à partir des eaux usées (W) et des boues activées au moyen du premier agitateur vertical (4, 4a, 4b) dans la première section de traitement (A), en ce que le premier corps d'agitation hyperboloïde (6, 6a, 6b) tourne à une première vitesse de rotation prédéfinie dans le premier sens de rotation et en ce que la suspension est aérée au moyen du dispositif d'aération,
agiter la suspension au moyen du second agitateur vertical (7, 7a, 7b), en ce que le second corps d'agitation hyperboloïde (9, 9a, 9b) tourne à une seconde vitesse de rotation prédéfinie dans le second sens de rotation et en ce que la suspension est aérée au moyen du dispositif d'aération,
laisser reposer la suspension dans la troisième section de traitement (C), sans l'agiter ni l'aérer au moyen du dispositif d'aération, et
décanter le surnageant au moyen du décanteur (3).

9. Procédé selon la revendication 8, en ce que la première vitesse de rotation est choisie de façon à être inférieure à la seconde vitesse de rotation.

10. Procédé selon la revendication 8 ou 9, en ce que la première vitesse de rotation est choisie de telle sorte qu'une concentration de boues activées dans une moitié inférieure côté fond de la suspension est supérieure à celle dans la moitié supérieure côté surface.

11. Procédé selon l'une des revendications 8 à 10, en ce que plusieurs premiers agitateurs verticaux (4, 4a, 4b) sont ménagés successivement dans le sens du courant dans la première section de traitement (A) et/ou plusieurs seconds agitateurs verticaux (7, 7a, 7b) successivement dans le sens du courant dans la deuxième section de traitement (B), les corps d'agitation hyperboloïdes (6, 6a, 6b, 9, 9a, 9b) d'agitateurs verticaux (4, 4a, 4b, 7, 7a, 7b) directement successifs tournant respectivement avec un sens de rotation opposé.

12. Procédé selon l'une des revendications 8 à 11, en ce que les eaux usées sont amenées en continu.

13. Procédé selon l'une des revendications 8 à 11, en ce que les eaux usées sont amenées séquentiellement.

14. Procédé selon l'une des revendications 8 à 13, en ce que la suspension n'est ni agitée ni aérée au moyen du dispositif d'aération à l'étape de mise au repos dans la deuxième section de traitement (B) et/ou dans la troisième section de traitement (C).

15. Procédé selon l'une des revendications 8 à 14 en ce que la suspension n'est ni agitée ni aérée au moyen du dispositif d'aération à l'étape de mise au repos dans la première section de traitement (A).
